# EUROPEAN PATENT SPECIFICATION

(11) **EP 3 497 004 B1**
(45) Date of publication and mention of the grant of the patent: **02.12.2020**
(21) Application number: 17752469.1
(22) Date of filing: 11.08.2017
(51) Int. Cl.: B62K 19/36

(54) **A SEAT CLAMP TO CLAMP A SEAT TUBE**
SITZKLEMME ZUM KLEMMEN EINES SITZROHRES
PINCE DE SELLE DESTINÉE À FIXER UN TUBE DE SELLE

(30) Priority: 11.08.2016 GB 201613787
(43) Date of publication of application: 19.06.2019
(73) Proprietor: Pashley Holdings Limited, Stratford-upon-Avon CV37 9NL (GB)
(72) Inventor: CUMBERPATCH, Jon Lewis, Stratford-upon-Avon CV37 9NL (GB)
(74) Representative: Dempster, Benjamin John Naftel
(86) International application number: PCT/GB2017/052379
(87) International publication number: WO 2018/029491

(56) References cited:
- WO-A1-2012/066215
- DE-A1-102012 010 459
- DE-U1- 29 500 596
- US-A1- 2013 312 231

## Description

The present invention relates to a bicycle seat clamp or tricycle seat clamp to clamp a seat tube.

Many bicycles andtricycles have height adjustable seat supports. Adjustable seat supports allow a bicycle to be made and sold with standard component parts, and then adjusted by the end user. This is particularly useful when the bicycle has more than one user, for example in the case of re-sale, hire or rental. This is also useful if the bicycle is only used by a single user who wants to adjust their seat height due to a change in preference or situation. When a child grows, for example, the seat can be raised.

A known quick release seat support for a bicycle comprises a seat post in the form of a circular tube that can be inserted into a circular cross section seat tube which is part of the bicycle frame. The end of the seat tube has a slit, and is surrounded by a clamp in the form of a split collar, with a bolt through the ends of the collar. Tightening of the bolt draws the ends of the collar closer together to reduce the diameter of the collar and hence reduce the diameter of the seat tube by partial closing of the slit, to thereby clamp the seat post in position in the seat tube.

A known quick release seat clamp is used to clamp bicycle seat posts to bicycle seat tubes, so that the user can adjust the height of the seat quickly and without the need for tools. The known quick release seat clamp includes a lever, a single cam and pivot, and a split collar which fits around the seat post and tube. The cam mechanism is used to reduce the radius of the collar until the seat post is fixed to the seat tube. This can be done by manually moving the lever to rotate the cam mechanism and tighten the grip of the collar. A screw mechanism can be used to adjust the radius of the collar, and the cam mechanism is then used to further reduce the radius of the collar until the seat post is fixed to the seat tube.

Document DE 295 00 596 U1 shows the preamble of claim 1.

There are various problems with known quick release seat clamps. While the screw mechanism is intended to be used for initial adjustment of the collar, the same tightening can be achieved by rotating the lever, effectively using it as a wing nut to tighten the screw. When used in this way, the lever, seat post and seat tube can be easily damaged by the user. For example, due to the nature of the lever and pivot, the lever can come into contact with seat post, seat tube, frame or seat easily. This can cause abrasion of the seat post, seat tube, frame or seat. For bicycles which have a coating such as a paint, enamel or plastic, this coating can be chipped by the lever. In bicycles which don't have a coating, the seat post, seat tube and frame can by abraded by the lever, which can detrimentally affect the appearance of the bicycle.

This problem is amplified when the user is attempting to adjust the height of the seat and seat post quickly. This problem is also amplified in hire or rental bicycles where the user does not have a specific incentive to maintain the appearance of the bicycle.

According to one aspect of the present invention, there is provided a bicycle seat clamp or tricycle seat clamp to clamp a seat tube which receives a seat post in order to hold the seat post in position in the seat tube, the seat clamp comprising a split collar to surround the seat tube, the split collar having a single split, the split being defined between two ends, the seat clamp further comprising a cam mechanism acting on the said ends and a lever to be operated by a user to operate the cam mechanism and thereby tighten the split collar, the lever being pivotally connected to the split collar through the cam mechanism and also being connected to the split collar through a simple pivot connection spaced from the split such that the direction of travel of the lever has a major component along the axis of the split collar.

The invention has the advantage of preventing wear and tear on the bike associated with rotation of the lever. The use of a simple pivot connection means that the objective of constraining movement of the lever can be achieved simply and at low cost.

The movement of the lever may be constrained such that the axis of the split collar/seat tube lies in the plane of movement of the lever.

This has the advantage of constraining the lever in a position where it is aligned with the seat tube and not easily knocked by the user.

The lever may be longer than the diameter of the split collar. This has the advantage that the user can open and close (clamp) the clamp more easily, as they have greater leverage, which reduces the force required. The lever may conveniently be Y-shaped. This provides a slim handle for convenient gripping by the user, and also is economical in use of material. The lever may be symmetrical.

The cam mechanism may be of any suitable type and may be an eccentric cam.

The cam mechanism may comprise a first ring on the lever and a journal on which the first ring pivots, the outer surface of the first ring constituting a cam surface. The first ring may be an eccentric cam. The journal of the cam mechanism may be connected to a bolt which passes through bores in the end of the split collar. In a preferred embodiment, the first ring comprises two sub-rings side by side and the journal is received in both sub-rings and a bolt is attached to the journal between the sub-rings. In this way the force through the bolt to close the ends of the split collar is central and divided between the two sub-rings.

The simple pivot connection may comprise a second ring on the lever, and a journal on which the second ring pivots, the second ring being of constant thickness. In a preferred embodiment, the second ring comprises two sub-rings side by side and the journal is received in both sub-rings, and a bolt is attached to the journal between the sub-rings.

The lever is preferably substantially symmetrical and may be symmetrical except for the first and second rings.

The pivot connections may be on opposite sides of the split collar.

The split collar may include a tab opposite the split and the lever may be pivotally connected to the tab through the simple pivot connection.

According to another aspect of the present invention, there is provided a seat clamp to clamp a seat tube which receives a seat post in order to hold the seat post in position in the seat tube, the seat clamp comprising a split collar to surround the seat tube and a lever to be operated by a user to tighten the split collar, wherein the lever is pivotally connected in two places on the same side of the split in order to constrain movement of the lever such that the direction of travel of the lever has a major component along the axis of the seat tube.

The invention has the advantage of preventing wear and tear on the bike associated with rotation of the lever.

The movement of the lever may be constrained such that the axis of the seat tube lies in the plane of movement of the lever.

This has the advantage of containing the lever in a position where it is aligned with the seat tube and not easily knocked by the user.

The lever may be longer than the diameter of the clamping means. This has the advantage that the user can open and close (clamp) the clamp more easily, as they have greater leverage, which reduces the force required. The lever may conveniently be Y-shaped. The lever may be symmetrical.

At least one pivot connection may include a cam mechanism to clamp the clamping means. The cam mechanism may be of any suitable type and may be an eccentric cam.

The clamping means may comprise a split collar and the cam mechanism may be arranged to bring the ends of the collar closer together to reduce the diameter of the collar.

The seat clamp may be a bicycle or tricycle seat clamp.

The split collar has a single split.

An embodiment of the invention will now be described, by way of example only, with reference to the following figures, in which:
Figure 1 is a perspective view of a seat clamp in an embodiment according to the present invention;
Figure 2 is an exploded perspective view of the seat clamp of Figure 1;
Figure 3a is a perspective view of an assembly of a seat tube, seat post and the seat clamp of Figure 1, showing the seat clamp in a closed (clamped) position;
Figure 3b is the view of Figure 3a in an open (not clamped) position, wherein the seat post height has been increased; and,
Figure 3c is the view of Figure 3b showing the seat clamp in the closed (clamped) position with the seat post at the new, raised height.

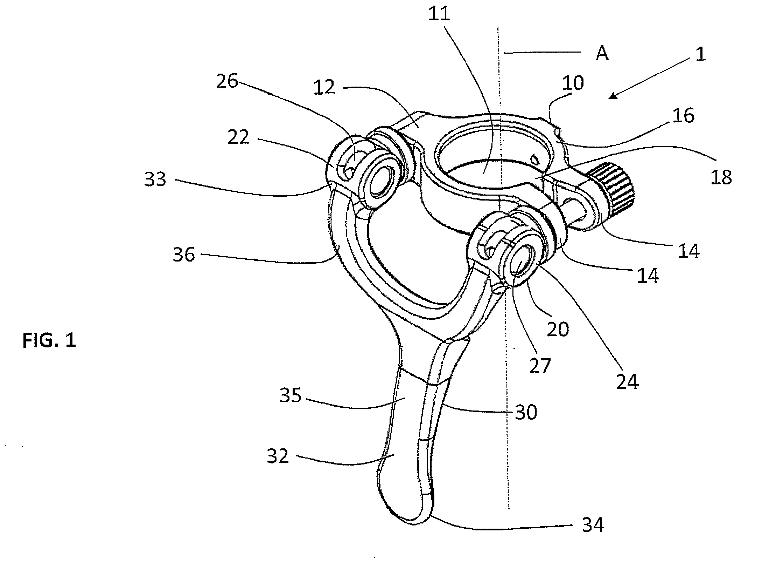

Figure 1 shows a seat clamp 1 in an embodiment of the invention. The seat clamp 1 comprises a collar 10, a cam mechanism 20 and a lever 30. The collar 10 comprises the aforesaid "clamping means".

The collar 10 is a split collar. The collar 10 defines a substantially circular opening 11 which defines a notional axis A, as shown in Fig 1. The collar 10 comprises a split collar main body 16, a split opening 18 and three tabs: one fixed tab 12 and two adjustable tabs 14. The fixed tab 12 has a larger dimension in a circumferential direction around the collar main body 16 than each adjustable tab 14. The split collar main body 16, and the three tabs 12, 14, are a single unitary piece. The tabs 12, 14, extend from the main body 16 away from the axis A. The two adjustable tabs 14 are on the opposite side of the main body 16 to the fixed tab 12. The two adjustable tabs 14 are on opposite sides of the split opening 18 to each other. The adjustable tabs 14 are adapted to be moved in a circumferential direction towards or away from each other. Movement of the adjustable tabs 14 away from each other causes enlargement of the circular opening 11. Movement of the adjustable tabs 14 towards each other causes a reduction in the size of the circular opening 11.

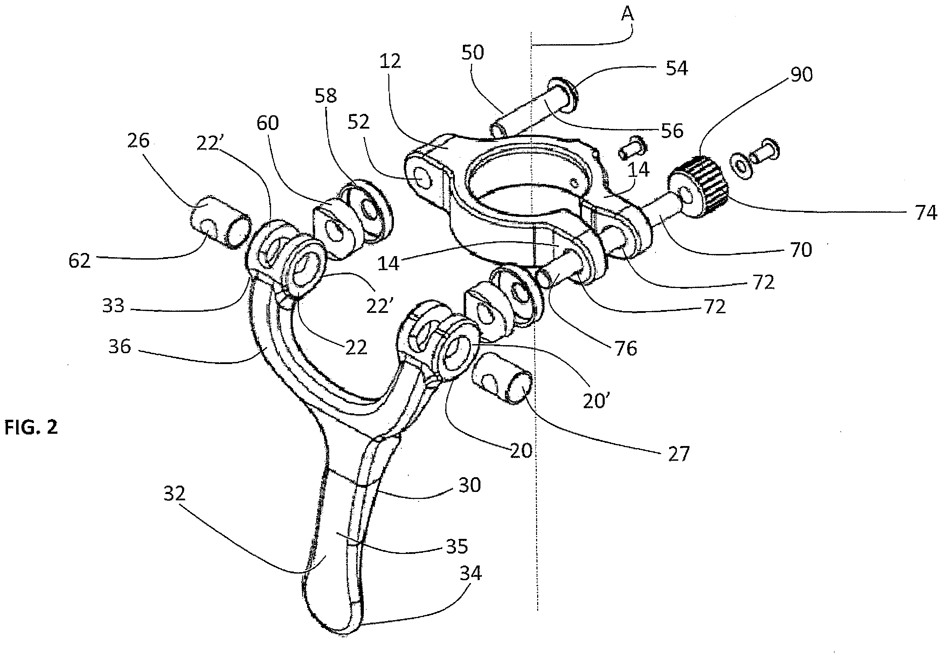

The cam mechanism 20 comprises a ring 22, a cam ring 24, a ring bar 26 and a cam ring bar 27. The ring bar 26 is best seen in Figure 2. The ring 22 is substantially circular. The ring 22 comprises two sub-rings. The two sub-rings are substantially the same and fixedly attached to each other side by side. The ring bar 26 has a cylindrical outer surface and is adapted to fit inside the ring 22. The cam ring 24 comprises two cam sub-rings, each cam sub-ring having an enlarged circumferential section on one side. Each cam sub-ring is thus an eccentric cam. In cross-section, the eccentric cam defines two circles which are not concentric; an outer circle and an inner circle, The inner circle is adapted to receive the cam ring bar 27. The two cam sub-rings are substantially the same and fixedly attached to each other side by side. The enlarged circumferential section of each cam ring is on an opposite side of the cam sub-rings (though not directly opposite) to where the cam sub-rings are attached to each other. The cam ring bar 27 has a cylindrical outer surface and is adapted to fit inside the cam ring 24. The rings 22, 24 and bars 26 comprise the aforesaid "pivot connections".

The lever 30 comprises a handle 32 and a U-shaped bridge 36. The handle 32 and the U-shaped bridge 36 of the lever 30 define a Y-shape. The lever 30 is symmetrical. The handle 32 is longer than the diameter of the collar 10. The handle 32 has a first end 33 and a second end 34. The handle 32 has a central stem 35, a larger portion than the stem 35 at its first end 33, and terminates in a larger portion than the stem 35 at its second end 34. The handle 32 is thus designed ergonomically. The U-shaped bridge 36 has a similar cross-sectional dimension to the handle 32. The U-shaped bridge 36 is substantially symmetrical. The handle 32 is aligned with and attached to the outside of the U-shaped bridge 36, such that the handle 32 defines an axis about which the U-shaped bridge is symmetrical.

The ring 22 of the cam mechanism 20 is integral with the end of one arm of the bridge 36, and the cam ring 24 of the cam mechanism 20 is integral with the end of the other arm of the bridge 36. The ring 22 and the cam ring 24 of the cam mechanism 20, and the handle 32 and U-shaped bridge 36 of the lever 30 are together a single unitary piece.

As shown in Figures 1 and 2, the collar 10 is attached to the ring 22 and the cam ring 24 via the ring bar 26 and the cam ring bar 27 respectively. A bolt 50 is received in a bore 52 through the fixed tab 12 of the collar 10. The head 54 of the bolt 50 engages the rear of the fixed tab 12, while the threaded end 56 passes in turn through a dished washer 58 and a bush 60, then between the sub rings 22' and into a radial threaded bore 62 in the ring bar 26. The bush 60 has a curved surface 64 to contact and complement the outer surfaces of the sub rings 22'. There is generally the same arrangement on the other side, except that the adjuster nut 74 of the cam bolt 70 is enlarged and includes grooves 90 for grip. The shaft 76 of the cam bolt 70 passes through bores 72 in the adjustable tabs 14.

The handle 32, U-shaped bridge 36, ring 22 and cam ring 24 are together adapted to pivot in a direction with a major component parallel to the axis A. Both the ring 22 and the cam ring 24 act as pivot points, so that movement of the lever 30 is constrained. This means that the lever 30 can only move in a plane in which the axis A of the collar 10 lies.

Starting from a closed (clamped) position, movement of the lever 30 in a first direction rotates the ring 22 and the cam ring 24 until the enlarged circumferential section of the cam ring 24 is no longer aligned with the collar 10 and in contact with the bush 60. The natural resilience of the metal collar 10 causes movement of the adjustable tabs 14 away from each other, which causes enlargement of the diameter of the circular opening 11 of the collar 10.

Starting from the open (not clamped) position, movement of the lever 30 in a second direction (the reverse of the first direction), rotates the ring 22 and the cam ring 24 until the enlarged circumferential section of the cam ring 24 is aligned with the collar 10 and engaged with the bush 60. This causes movement of the adjustable tabs 14 towards each other, which causes a reduction in the size of the opening 11 in the collar 10.

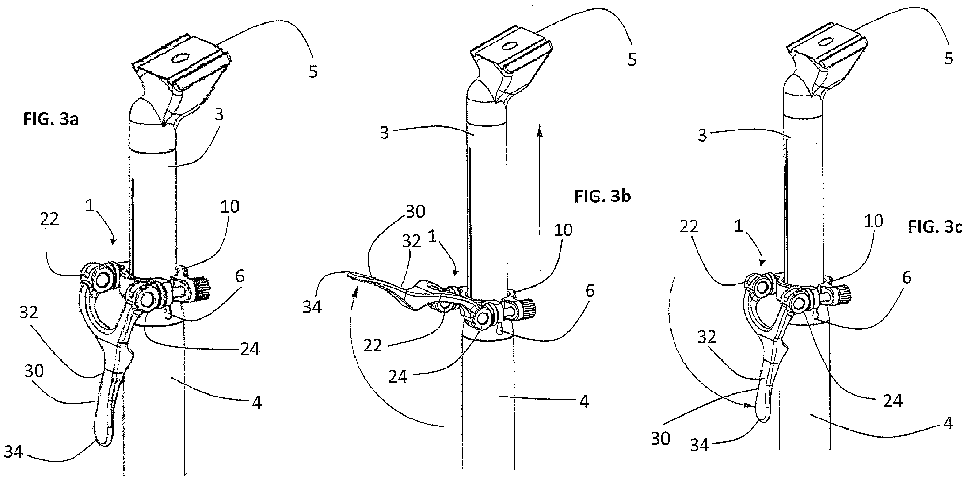

Figures 3a, 3b and 3c show the seat clamp in three stages of use. In order to adjust the height of the seat, a user follows the steps outlined below in stages 1 to 3.

### Stage 1

Figure 3a shows the seat clamp 1 in a closed (clamped position), clamped to a seat tube 4. A seat post 3 is received in the seat tube 4. The seat post 3 has a fixture 5 at the top to mount a saddle (not shown). The opening 11 of the collar 10 is adjusted to such a diameter that the seat clamp 1 clamps and grips the seat tube 4. The seat tube 4 includes a slit 6, so that when the seat clamp 1 is clamped, the diameter of the top of the seat tube 4 can be reduced to grip the seat post 3. In this position, the seat post 3 and seat tube 4 are fixed in place relative to each other by the seat clamp 1.

### Stage 2

In order to change the height of the seat and seat post 3, starting from the arrangement shown by Figure 3a, the user must pivot the lever 30 about the pivot points in a first direction, namely upwards, rotating it so that the second end 34 of the lever 30 is closer to the seat.

This causes rotation of the ring 22 and the cam ring 24 until the enlarged circumferential section of the cam ring 24 is no longer aligned with the collar 10 and in contact with the bush 60. As stated previously, this causes movement of the adjustable tabs 14 away from each other, which causes enlargement of the opening 11 of the collar 10.

Enlargement of the opening 11 reduces and removes the clamping force of the seat clamp 1, and allows movement of the seat post 3 relative to the seat tube 4 in direction along the axis A. The seat and seat post 3 can be moved to the preferred height, as shown in Figure 3b.

### Stage 3

In order to fix the seat and seat post 3 in place at the preferred height, the user must pivot the lever 30 about the pivot points in a second direction (the second direction being the opposite direction to the first direction), rotating the lever 30 so that the second end 34 of the handle 32 is further away from the seat.

This causes rotation of the ring 22 and the cam ring 24 until the enlarged circumferential section of the cam ring 24 is aligned with the collar 10. As stated previously, this causes movement of the adjustable tabs 14 towards each other, which causes a reduction in the size of the opening 11 the collar 10.

Reduction in the size of the opening 11 causes a clamping force of the seat clamp 1 to act on the seat tube 4, and hold the seat post 3 in place relative to the seat tube 4. In this position (shown by Figure 3c), the seat post 3 and seat tube 4 are fixed relative to each other.

The movement of the lever 30 is constrained because, unlike the prior known lever described above, it is connected to the collar 10 at two positions through the rings 22, 24. Hence it can only move up and down, and cannot be used like a wing nut, with the consequent risk of damage to adjacent surfaces of the bicycle or tricycle. Also, while the prior lever is no longer than the diameter of the seat tube, so that it does not stick out when the cycle is in use, the lever 32 of the embodiment can be longer, as it lies down the back of the seat tube 4 when clamped and cannot be pivotted sideways to get in the way of the rider. Indeed the length of the lever 30 in the embodiment, from the rings 22, 24, to the free end 34 of the handle 32 is 105mm, which is 3.3 times the diameter of the seat post 3.

It will be noted that the ring bars 26, 27, dished washers 58, bushes 60 and cam belt 70 are in common with the known quick release seat clamp described in the introduction. Only the lever 30 and collar 10 are new. (The bolt 50 is not in the known seat clamp, but it is an off the shelf, standard item). This use of known standard items improves efficiency and reduces cost.

All of the parts of the seat clamp 1 may be made from steel or aluminium or any other suitable material with the exception of the bushes 60, which may be made from a suitable low friction plastics material such as nylon.

Although a specific form and arrangement of seat clamp is shown in the Figures, it will be appreciated that changes could be made to the device shown whilst still performing the function of the present invention as defined in the appended claims.

Also, the cam need not be an eccentric cam, the cam surface could be non-circular. Also, as the movement of the lever is only ever about 120° the cam surface could be just over a 120° arc of the cam ring 24.

## Claims

1. A bicycle seat clamp or tricycle seat clamp to clamp a seat tube which receives a seat post in order to hold the seat post in position in the seat tube, the seat clamp comprising a split collar (10) to surround the seat tube, the split collar (10) having a single split (18), the split being defined between two ends (14), the seat clamp further comprising a cam mechanism (20) acting on the said ends (14) and a lever (30) to be operated by a user to operate the cam mechanism (20) and thereby tighten the split collar (10), the lever (30) being pivotally connected to the split collar (10) through the cam mechanism (20), **characterised in that** the lever is also connected to the split collar (10) through a simple pivot connection (20) spaced from the split (18) such that the direction of travel of the lever (30) has a major component along the axis of the split collar (10).

2. A seat clamp as claimed in claim 1, wherein the cam mechanism (20) comprises a first ring (24) on the lever (30), and a journal (27) on which the first ring (24) pivots, the outer surface of the first ring (24) constituting a cam surface.

3. A seat clamp as claimed in claim 2, wherein the journal (27) of the cam mechanism (20) is connected to a bolt (70) which passes through bores (72) in the ends (14) of the split collar (10).

4. A seat clamp as claimed in claim 3, wherein the first ring (24) comprises two sub-rings side by side, and the journal (27) is received in both sub-rings, and the bolt (70) is attached to the journal (27) between the sub-rings.

5. A seat clamp as claimed in any preceding claim, wherein the simple pivot connection comprises a second ring (22) on the lever (30), and a journal (26) on which the second ring (22) pivots, the second ring (22) being of constant thickness.

6. A seat clamp as claimed in claim 5, wherein the second ring (22) comprises two sub-rings (22') side by side, and the journal (26) is received in both sub-rings (22'), and a bolt (50) is attached to the journal (26) between the sub-rings (22').

7. A seat clamp as claimed in claim 5 or claim 6 when dependent on claim 2, 3 or 4, wherein the lever (30) is symmetrical except for the rings (22, 24).

8. A seat clamp as claimed in any preceding claim, wherein the pivot connections are on opposite sides of the split collar (10).

9. A seat clamp as claimed in any preceding claim, wherein the split collar (10) includes a tab (12) opposite the split (18), and the lever (30) is pivotally connected to the tab (12) through the simple pivot connection.

10. A seat clamp as claimed in any preceding claim, wherein movement of the lever (30) is constrained such that the axis of the split collar (10) lies in the plane of movement of the lever (30).

11. A seat clamp as claimed in any preceding claim, wherein the lever (30) is longer than the diameter of the split collar (10).

12. A seat clamp as claimed in claim 11, wherein the lever (30) is more than twice as long as the diameter of the split collar (10).

13. A seat clamp as claimed in claim 11, wherein the lever (30) is more than three times as long as the diameter of the split collar (10).

14. A seat clamp as claimed in any preceding claim, wherein the lever (30) is Y-shaped.

## Patentansprüche

1. Fahrradsitzklemme oder Dreiradsitzklemme zum Festklemmen eines Sattelrohrs, das eine Sattelstütze aufnimmt, um die Sattelstütze in Position im Sattelrohr zu halten, wobei die Sitzklemme eine geteilte Manschette (10) aufweist, um das Sattelrohr zu umgeben, wobei die geteilte Manschette (10) eine einzige Teilung (18) aufweist, die Teilung (18) zwischen zwei Enden (14) definiert ist, wobei die Sitzklemme ferner einen auf die Enden (14) einwirkenden Nockenmechanismus (20) und einen Hebel (30) aufweist, der von einem Benutzer betätigt wird, um den Nockenmechanismus (20) zu betätigen und dadurch die geteilte Manschette (10) festzuziehen, wobei der Hebel (30) schwenkbar über den Nockenmechanismus (20) mit der geteilten Manschette (10) verbunden ist, **dadurch gekennzeichnet**, so dass der Hebel auch mit der geteilten Manschette (10) über eine einfache Schwenkverbindung (20) verbunden ist, die von der Teilung (18) beabstandet ist, dass die Bewegungsrichtung des Hebels (30) eine Hauptkomponente entlang der Achse der geteilten Manschette (10) aufweist.

2. Sitzklemme nach Anspruch 1, wobei der Nockenmechanismus (20) einen ersten Ring (24) am Hebel (30) und einen Zapfen (27) umfasst, um dem der erste Ring (24) schwenkt, wobei die Außenfläche des ersten Rings (24) eine Nockenfläche bildet.

3. Sitzklemme nach Anspruch 2, wobei der Zapfen (27) des Nockenmechanismus (20) mit einem Bolzen (70) verbunden ist, der durch Bohrungen (72) in den Enden (14) der geteilten Manschette (10) verläuft.

4. Sitzklemme nach Anspruch 3, wobei der erste Ring (24) zwei Teilringe nebeneinander umfasst, und der Zapfen (27) in beiden Teilringen aufgenommen ist, und der Bolzen (70) zwischen den Teilringen am Zapfen (27) angebracht ist.

5. Sitzklemme nach einem der vorhergehenden Ansprüche, wobei die einfache Schwenkverbindung einen zweiten Ring (22) am Hebel (30) und einen Zapfen (26) umfasst, um den der zweite Ring (22) schwenkt, wobei der zweite Ring (22) eine konstante Dicke aufweist.

6. Sitzklemme nach Anspruch 5, wobei der zweite Ring (22) zwei Teilringe (22') nebeneinander aufweist, und der Zapfen (26) in beiden Teilringen (22') aufgenommen ist, und ein Bolzen (50) an dem Zapfen (26) zwischen den Teilringen (22') angebracht ist.

7. Sitzklemme nach Anspruch 5 oder Anspruch 6, wenn abhängig von Anspruch 2, 3 oder 4, wobei der Hebel (30) mit Ausnahme der Ringe (22, 24) symmetrisch ist.

8. Sitzklemme nach einem der vorhergehenden Ansprüche, wobei sich die Schwenkverbindungen auf gegenüberliegenden Seiten der geteilten Manschette (10) befinden.

9. Sitzklemme nach einem der vorhergehenden Ansprüche, wobei die geteilte Manschette (10) eine Lasche (12) gegenüber der Teilung (18) umfasst, und der Hebel (30) über die einfache Schwenkverbindung schwenkbar mit der Lasche (12) verbunden ist.

10. Sitzklemme nach einem der vorhergehenden Ansprüche, wobei die Bewegung des Hebels (30) derart eingeschränkt ist, dass die Achse der geteilten Manschette (10) in der Bewegungsebene des Hebels (30) liegt.

11. Sitzklemme nach einem der vorhergehenden Ansprüche, wobei der Hebel (30) länger als der Durchmesser der geteilten Manschette (10) ist.

12. Sitzklemme nach Anspruch 11, wobei der Hebel (30) mehr als doppelt so lang ist wie der Durchmesser der geteilten Manschette (10).

13. Sitzklemme nach Anspruch 11, wobei der Hebel (30) mehr als dreimal so lang ist wie der Durchmesser der geteilten Manschette (10).

14. Sitzklemme nach einem der vorhergehenden Ansprüche, wobei der Hebel (30) Y-förmig ist.

## Revendications

1. Pince de selle de bicycle ou de tricycle pour serrer un tube de selle qui reçoit une tige de selle pour tenir la tige de selle en place dans le tube de selle, la pince de siège comprenant un collier fendu (10) pour entourer le tube de siège, le collier fendu (10) ayant une fente unique (18), cette fente étant définie entre deux extrémités (14), la pince de selle comprenant en outre un mécanisme de came (20) agissant sur les extrémités (14) et un levier (30) manœuvré par l'utilisateur pour actionner le mécanisme de came (20) et serrer ainsi le collier fendu (10), le levier (30) étant relié en pivotement au collier fendu (10) par le mécanisme de came (20),
pince de selle **caractérisé en ce que**
le levier est également relié au collier fendu (10) par une connexion simple de pivotement (20) écartée de la fente (18) de façon que la direction de mouvement du levier (30) présente une composante principale selon l'axe du collier fendu (10).

2. Pince de selle selon la revendication 1,
selon laquelle
le mécanisme de came (20) comporte un premier anneau (24) sur le levier (30) et un palier (27) sur lequel pivote le premier anneau (24), la surface extérieure du premier anneau (24) constituant une surface de came.

3. Pince de selle selon la revendication 2,
selon laquelle
le palier (27) du mécanisme de came (20) est relié à une vis (70) qui traverse des perçages (72) des extrémités (14) du collier fendu (10).

4. Pince de selle selon la revendication 3,
selon laquelle
le premier anneau (24) comporte deux sous-anneaux côte à côte et le palier (27) passe dans les sous-anneaux, la vis (70) étant fixée au palier (27) entre les sous-anneaux.

5. Pince de selle selon l'une quelconque des revendications précédentes,
selon laquelle
la connexion simple de pivotement comporte un second anneau (22) sur le levier (30) et un palier (26) sur lequel pivote un second anneau (22), le second anneau (22) étant d'épaisseur constante.

6. Pince de selle selon la revendication 5,
selon laquelle
le second anneau (22) comporte deux sous-anneaux (22') côte à côte et le palier (26) passe dans les sous-anneaux (22') et une vis (50) est fixée au palier (26) entre les sous-anneaux (22').

7. Pince de selle selon la revendication 5 ou la revendication 6, dépendant des revendications 2, 3 ou 4,
selon laquelle
le levier (30) est symétrique à l'exception des anneaux (22, 24).

8. Pince de selle selon l'une quelconque des revendications précédentes,
selon laquelle
les connexions de pivotement sont sur les côtés opposés du collier fendu (10).

9. Pince de selle selon l'une quelconque des revendications précédentes,
selon laquelle
le collier fendu (10) comporte une patte (12) à l'opposé de la fente (18) et le levier (30) est relié en pivotement à la patte (12) par la connexion simple de pivotement.

10. Pince de selle selon l'une quelconque des revendications précédentes,
selon laquelle
le mouvement du levier (30) est limité de façon que l'axe du collier fendu (10) se situe dans le plan de mouvement du levier (30).

11. Pince de selle selon l'une quelconque des revendications précédentes,
selon laquelle
le levier (30) est plus long que le diamètre du collier fendu (10).

12. Pince de selle selon la revendication 11,
selon laquelle
le levier (30) a une longueur plus que double du diamètre du collier fendu (10).

13. Pince de selle selon la revendication 11,
selon laquelle
la longueur du levier (30) est plus que trois fois le diamètre du collier fendu (10).

14. Pince de selle selon l'une quelconque des revendications précédentes,
selon laquelle
le levier (30) est en forme de Y.
